# EUROPEAN PATENT SPECIFICATION

(11) **EP 1 338 478 B1**
(45) Date of publication and mention of the grant of the patent: **25.05.2005**
(21) Application number: 02023739.2
(22) Date of filing: 23.10.2002
(51) Int. Cl.: B60R 21/16

(54) **Passenger protecting device**
Insassenschutzeinrichtung
Dispositif de protection du passager

(30) Priority: 25.12.2001 JP 2001392078
(43) Date of publication of application: 27.08.2003
(73) Proprietor: TAKATA CORPORATION, Minato-ku, Tokyo 106-8510 (JP)
(72) Inventor: Abe, Kazuhiro, Minato-ku, Tokyo 106-8510 (JP)
(74) Representative: Banzer, Hans-Jörg, Dipl.-Ing.

(56) References cited:
- EP-A- 1 086 860
- DE-A- 19 860 933
- US-A- 3 747 952
- US-A- 6 024 377
- PATENT ABSTRACTS OF JAPAN vol. 012, no. 289 (M-728), 8 August 1988 (1988-08-08) -& JP 63 064851 A (MICHIHIRO KANNONJI), 23 March 1988 (1988-03-23)

## Description

### [Technical Field of the Invention]

The present invention relates to a passenger protecting device for protecting an arm of a passenger of a motorvehicle in case of motorvehicle collision, and more specifically, to a passenger protecting device including an airbag.

### [Description of the Related Art]

A measure to provide an airbag device for a driver's seat in a steering wheel, a measure to provide an airbag device for a front passenger seat in an instrument panel forwardly of the front passenger seat, and a measure to provide a kneebag device forwardly of legs of the passengers for protecting a passenger of a motorvehicle in case of motorvehicle collision are known.

US-A-3,747,952 discloses a manifold with a number of tubular inflatable elements, which, upon a collision, expand in front of the passenger. US-A-6,024,377 discloses a low-mount airbag restraint system capable of deploying a single airbag to protect the upper and lower body portions of a seat occupant.

### [Problems to be Solved by the Invention]

It is an object of the present invention to provide a passenger protecting device for protecting a passenger by receiving an arm of the passenger by an airbag in case of motorvehicle collision.

### [Means for Solving the Problems]

According to the present invention, this object is achieved by a passenger protecting device as defined in claim 1 and by a passenger protecting device as defined in claim 4, respectively. The dependent claims define preferred and advantageous embodiments of the invention.

In such passenger protecting devices, the air bag is inflated forwardly of the arm of the passenger to receive and protect the same in case of emergency such as collision or the like.

In case of the passenger protecting device of claim 1, the gas generator may be shared among a kneebag device for protecting the legs of the passenger or an airbag device for the driver's seat. In case of the passenger protecting device of claim 4, the arm-protecting airbag device is in communication with the kneebag device and an airbag device for a front passenger seat. In these arrangements, the number of gas generators to be installed may be prevented from increasing.

In case of the passenger protecting device of claim 1, the arm-protecting airbag device may be communicated with an airbag in the kneebag device or an airbag in the airbag device for the driver's seat. In case of the passenger protecting device of claim 4, the gas generator may be shared among the kneebag device, the arm-protecting airbag device and the airbag in the airbag device for the front passenger seat.

Gas from the gas generator is introduced into the arm-protecting airbag through the kneebag or the airbag for the driver's seat. In this passenger protecting device, the arm-protecting airbag may be folded and stored integrally with the kneebag or the airbag for the driver's seat.

### [Brief Description of the Drawings]

Fig. 1 is a perspective view showing the operation of a passenger protecting device according to a first embodiment of the present invention.
Fig. 2 (a) is a side view of the passenger protecting device shown in Fig. 1 in the operating state, and Fig. 2(b) is a cross sectional view taken along the line B-B in Fig. 2(a).
Fig. 3 is a perspective view showing the operation of the passenger protecting device according to a second embodiment of the present invention.
Fig. 4 is a perspective view showing the operation of the passenger protecting device according to a third embodiment of the present invention.
Fig. 5 is a perspective view showing the operation of the passenger protecting device according to a fourth embodiment of the present invention.
Fig. 6 is a perspective view showing the operation of the passenger protecting device according to a fifth embodiment of the present invention.
Fig. 7 is a drawing showing the operation of the passenger protecting device according to the fifth embodiment of the present invention when viewed from below.
Fig. 8 is a drawing showing the operation of the passenger protecting device according to a sixth embodiment of the present invention when viewed from below.
Fig. 9 is a perspective view showing the operation of the passenger protection device according to a seventh embodiment of the present invention.
Fig. 10 is a side view of the device shown in Fig. 9 in operation.

### [Description of the Embodiments]

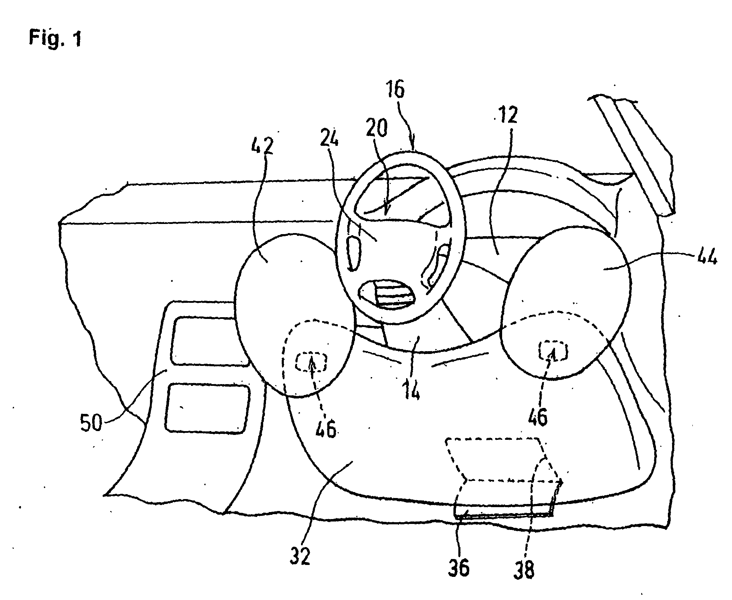

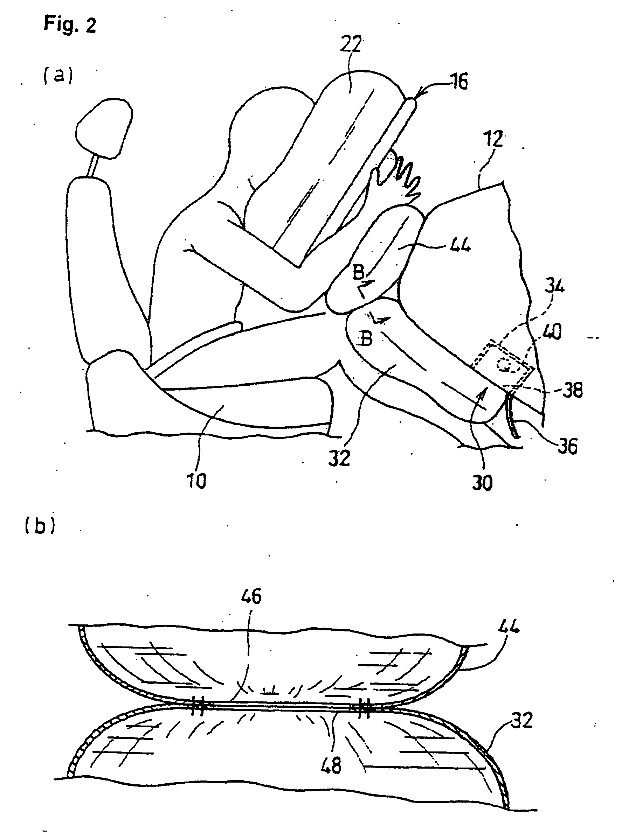

Referring now to the drawings, an embodiment of the present invention will be described below. Fig. 1 is a perspective view showing an inflated state of a kneebag and an arm-protecting airbag of the passenger protection device according to a first embodiment of the present invention; Fig. 2(a) is a side view showing a state in which the airbag for the driver's seat is also inflated; and Fig. 2(b) is a cross sectional view taken along the line B-B in Fig. 2(a). In the description below, the lateral direction represents the left-and-right direction of the motorvehicle, and the fore-and-aft direction represents the fore-and-aft directions of the motorvehicle.

A steering column (not shown) is projected from an instrument panel 12 located forwardly of the driver's seat 10, and the steering column is surrounded by a steering column cover 14. The distal end of the steering shaft projecting from the steering column is attached with a steering wheel 16 and the steering wheel 16 is provided with an airbag device for the driver's seat 20 therein. The airbag device for the driver's seat 20 includes a retainer, an airbag 22 mounted on the retainer, an inflator for inflating the airbag 22, and a module cover 24 for covering the folded airbag 22. According to the airbag device for the driver's seat 20, as is well known, when the inflator is actuated, the airbag 22 is inflated, and the module cover 24 is broken, and the airbag 22 is inflated so as to cover the steering wheel 16.

A kneebag device 30 is installed in the instrument panel 12 located downwardly of the steering column cover 14. An airbag (hereinafter referred to as kneebag) 32 of the kneebag device 30 is stored in a container-shaped retainer (kneebag retaining member) 34 provided in the instrument panel 12 in a folded state. A lid 36 is mounted on the retainer 34 so as to cover the bent kneebag 32. The lid 36 closes an opening 38 formed on the instrument panel 12 for inflation of the kneebag. A gas generator 40 for inflating the kneebag 32 is installed in the retainer 34. When the gas generator 40 is actuated, gas from the gas generator 40 is introduced into the kneebag 32, and the kneebag 32 is popped out through the opening 38 and is inflated in the interior of the vehicle while pushing the lid 36 to open.

When the kneebag 32 is, as shown in Fig. 2(a), popped out and inflated through the opening 38, it is deployed upwardly along the front surface of the instrument panel 12, and covers the lower half of the instrument panel 12 facing toward the leg portions of the passenger sitting on the driver's seat. The upper portion of the kneebag 32 is adapted to spread up to the area near the lower portion of the steering column cover 14 in a state in which the kneebag 32 is completely inflated.

A pair of arm-protecting airbags (hereinafter the arm-protecting airbag is referred to as armbag) 42, 44 are connected to the left and right side of the upper portion of the inflated kneebag 32. In this embodiment, openings 46 for introducing gas into the respective armbags 42, 44 are formed at the lower portions of the respective armbags 42, 44, and the kneebag 32 is formed with openings 48 corresponding to the openings 46 for introducing gas from the gas generator 40 on the left and right side of the upper portion thereof. The respective armbags 42, 44 and the kneebag 32 are connected by joining the peripheral edges of these openings 46, 48 with each other by stitching or the like. Though these openings 46, 48 are formed on the surface of the kneebag 32 facing toward the passenger, they may be formed on the surfaces thereof facing toward the instrument panel 12 as well.

As shown in Fig. 1, the armbag 42 connected on the left side of the kneebag 32 is inflated so as to cover the left side area of the steering column cover 14 and the upper portion of a center console panel 50. The armbag 44 connected to the right side of the upper portion of the kneebag 32 is inflated so as to cover the right side area of the steering column cover 14.

In the passenger protecting device of the present embodiment thus constructed, the respective armbags 42, 44 are folded and stored in the retainer 34 integrally with the kneebag 32.

In case of emergency such as motorvehicle collision, the gas generator 40 of the kneebag device and the gas generator (not shown) of the airbag device for the driver's seat are actuated, and thus the kneebag 32 and the airbag 22 are inflated by gas from them. The kneebag 32 pushes and opens the lid 36 and starts being inflated in the interior of the motorvehicle, and is inflated forwardly of the leg potions of the passenger sitting on the driver's seat as described above. The airbag 22 pushes and opens the module cover 24 and is deployed so as to cover the steering wheel 16, and inflated at the position forwardly of the face and the upper half body of the passenger.

In this embodiment, gas introduced from the gas generator 40 to the kneebag 32 flows or is injected through the kneebag 32 to the respective armbags 42, 44, whereby the armbags 42, 44 are inflated and deployed in the space on the left and right between the instrument panel 12 and the backside of the steering wheel 16, so as to receive the left and right arms of the passenger.

This prevents the legs, the face, and the upper half body of the passenger from directly striking onto the vehicle body, and in addition, reliably prevents the left and right arms of the passenger from directly striking onto the vehicle body.

In the passenger protection device according to the present embodiment, since the armbags 42, 44 are connected to the kneebag 32 respectively, when in normal use, the respective armbags 42, 44 may be folded and stored in the kneebag device retainer 34 integrally with the kneebag 32. The respective armbags 42, 44 may be inflated integrally with the kneebag 32 by the gas generator 40 shared with the kneebag 32. This eliminates necessity of providing a separate retainer or the like for storing the gas generator for inflating the respective armbags 42, 44 and the respective armbags 42, 44, and thus simplifies the structure, which is very economical.

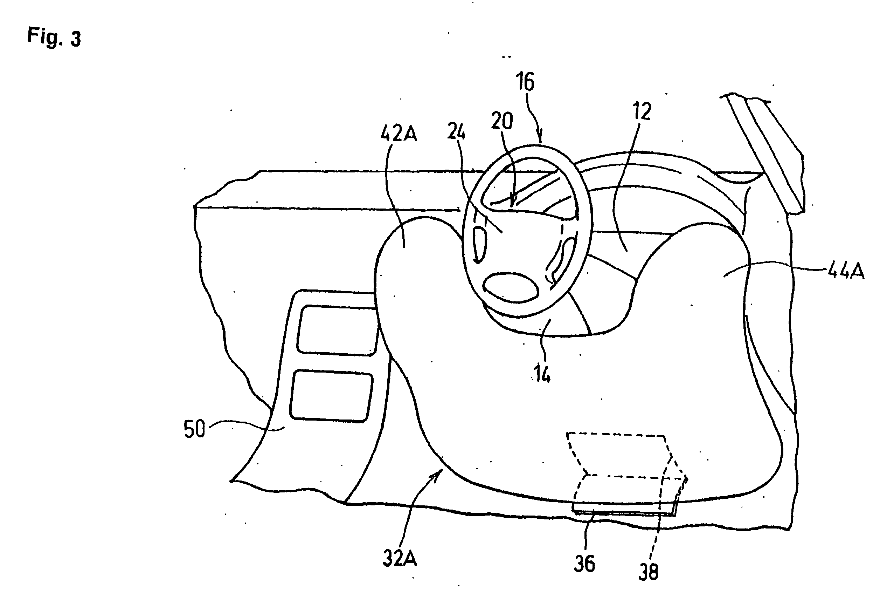

Though the armbags 42, 44 and the kneebag 32 are provided separately and joined integrally with each other by stitching or the like in the present embodiment, as in the passenger protecting device as shown in the following Fig. 3, the structure in which the armbag and the kneebag are formed integrally from a continuous ground fabric (panel) in advance may be employed.

Fig. 3 is a perspective view of the kneebag in the passenger protecting device according to a second embodiment of the present invention in a state of being inflated.

The passenger protecting device shown in Fig. 3 is constructed in such a manner that armbags 42A, 44A overhanging from a kneebag 32A so as to be inflated forwardly of the left and right arms of the passenger on the driver's seat are provided on the left and right sides of the upper portion of the kneebag 32A in the inflated state. In case of motorvehicle collision, the respective arm bags 42A, 44A start to be inflated integrally with the kneebag 32A by gas from the gas generator 40. The armbag 42A is inflated so as to cover the left side area of the steering column cover 14 and the upper portion of the center console panel 50 along the front surface of the upper portion of the instrument panel 12, so that the left arm is received and protected. The armbag 44A is inflated so as to cover the right side area of the steering column cover 14 along the front surface of the upper portion of the instrument panel 12 so that the right arm is received and protected.

In this passenger protecting device for the driver's seat shown in Fig. 3, since the kneebag 32A and the armbags 42A, 44A overhanging from the kneebag 32A are formed integrally in advance, it is not necessary to join the armbags to the kneebag by stitching or the like when manufacturing, thereby significantly simplifying manufacturing.

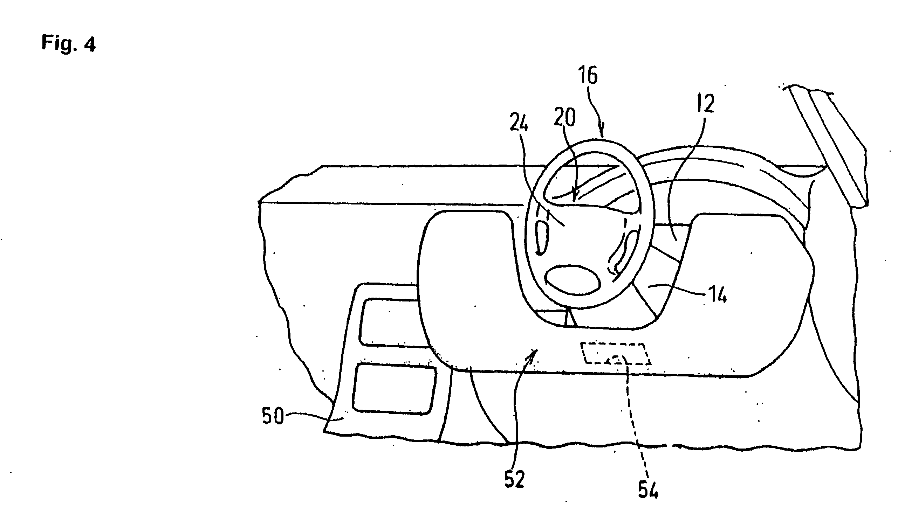

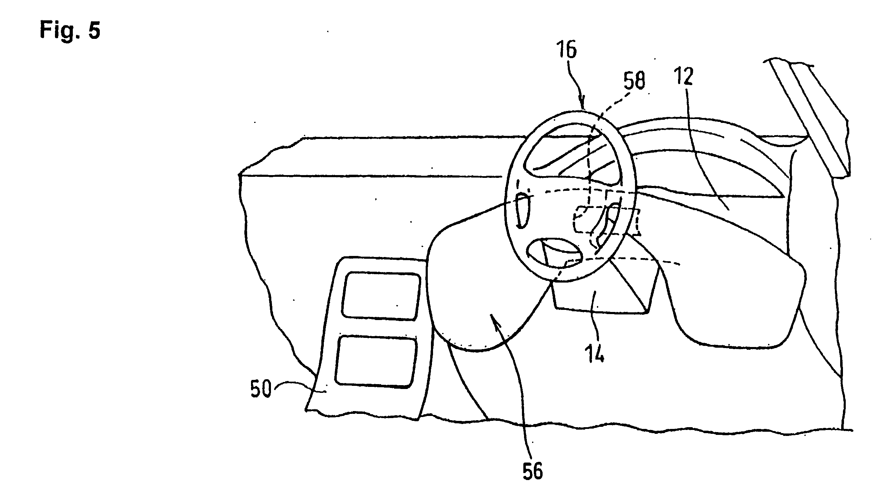

Though the respective armbags 42A, 44A are adapted to be inflated by the gas generator 40 for the kneebag device in the present embodiment, the armbag device having a gas generator for inflating the armbag may be provided separately from the kneebag device or the airbag device as passenger protecting devices shown in the following Fig 4 or Fig 5. Fig. 4 and Fig. 5 are perspective views of the passenger protecting device according to third and fourth embodiments of the present invention showing a state in which the armbags are inflated.

The passenger protection device in Fig. 4 includes an armbag 52 formed independently of the kneebag or airbag, and an armbag device having a gas generator (not shown) for inflating the armbag 52 in the instrument panel 12 located downwardly of the steering column cover 14. The reference numeral 54 indicates an opening for popping out the armbag for inflation. The opening 54 is normally closed by the lid.

In this passenger protection device, in case of motorvehicle collision, the armbag 52 is inflated through the opening 54 into the interior of the motorvehicle by gas from the gas generator and is spread substantially in the shape of a letter U, i.e. U-like which extends upward on the left and right side, along the front surface of the instrument panel 12. The left half thereof is inflated so as to cover the left side area of the steering column cover 14 and the upper portion of the center console panel 50 so that the left arm of the passenger is received and protected, and the right half thereof is inflated so as to cover the right side area of the steering column cover 14 so that the right arm of the passenger is received and protected.

In the passenger protecting device in Fig. 5, as in the case of the protecting device in Fig. 4, an armbag device including an armbag 56 provided independently of the kneebag and the airbag and a gas generator (not shown) for inflating the armbag 56 are provided on the instrument panel 12 above the steering column cover 14. The reference numeral 58 indicates an opening for popping out the armbag for inflation. The opening 58 is normally closed by the lid. The armbag device may be provided inside the steering column cover 14.

In this passenger protecting device, in case of motorvehicle collision, the armbag 56 is inflated through the opening 58 into the interior of the motorvehicle by gas from the gas generator and is spread substantially in the shape of an inverted letter U, which extends upward on the left and right side, along the front surface of the upper portion of the instrument panel 12. The left half thereof is inflated so as to cover the left side area of the steering column cover 14 and the upper portion of the center console panel 50 so that the left arm of the passenger is received and protected, and the right half thereof is inflated so as to cover the right side area of the steering column cover 14 so that the right arm of the passenger is received and protected.

In the passenger protecting devices shown in Fig. 4 and Fig. 5, the left halves of the armbags 54, 56 to be inflated forwardly of the left arm of the passenger on the driver's seat and the right halves to be inflated forwardly of the right arm of the passenger on the driver's seat are formed integrally. However, it is also possible to form openings for popping out the armbags for inflation respectively on the left and right sides of the steering column cover 14, and to provide separate armbag devices having an armbag that inflates forwardly of the left arm or forwardly of the right arm of the passenger on the driver's seat respectively so as to face toward the respective openings.

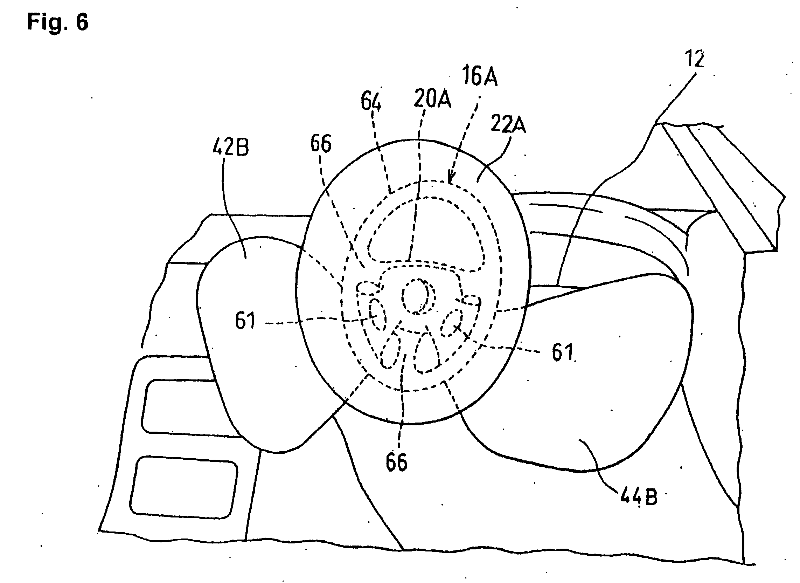

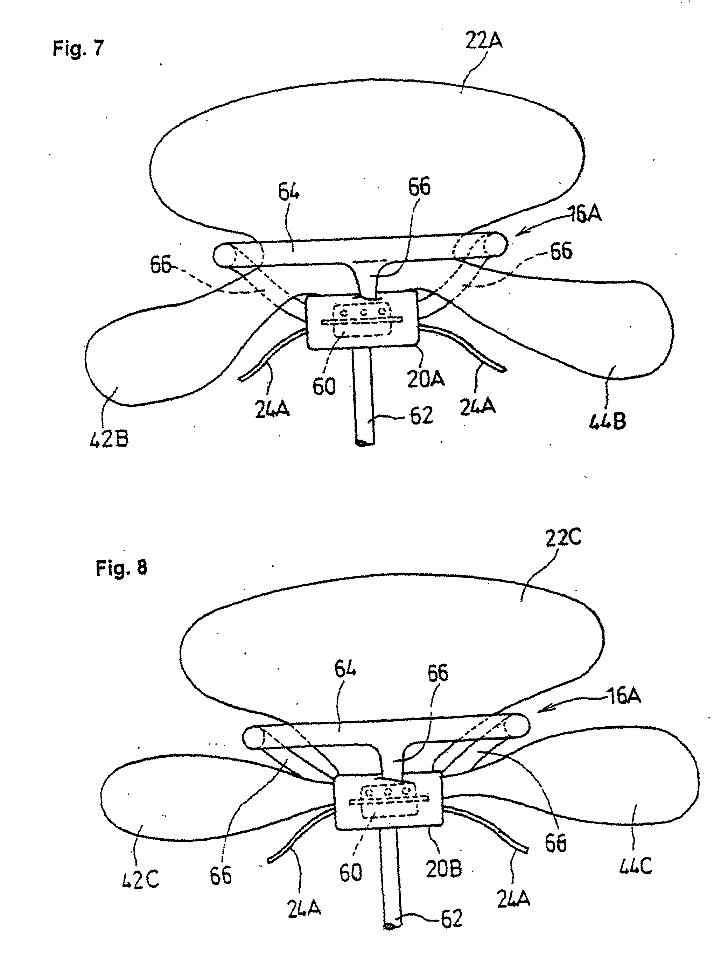

Fig. 6 and Fig. 7 are a perspective view of the airbag and the armbag in the passenger protecting device in the inflated state, and a drawing of the steering wheel viewed from below according to a fifth embodiment of the present invention respectively.

In the passenger protecting device shown in Figs. 6 and 7, a pair of armbags 42B, 44B that may be inflated forwardly of the left and right arms of the passenger on the driver's seat are respectively connected to both left and right sides of the rear surface (the surface opposite from the passenger) of an airbag 22A in the inflated state, and the armbags 42B, 44B are in communication with the airbag 22A through a communication port 61 respectively. The airbag 22A is folded integrally with the armbags 42B, 44B and covered by a module cover 24A (Fig. 7) of the airbag device 20A.

In this passenger protecting device, in case of emergency such as motorvehicle collision and the like, the airbag 22A is inflated by gas from the gas generator 60 of the airbag device 20A, pushes and opens the module cover 24A, and is spread so as to cover the front surface of the steering wheel 16A.

At this moment, gas introduced from the gas generator 60 into the airbag 22A flows also into the respective armbags 42B, 44B via the communication port 61, whereby the armbags 42B, 44B are inflated forwardly of the left and right arms of the passenger on the driver's seat respectively. As shown in Figs. 6 and 7, in this embodiment, a steering wheel 16A includes three spoke members 66 extending from a wheel member 64 toward the center thereof. When the armbags 42B, 44B start being inflated, the armbags 42B, 44B start being inflated to the left and right sides passing through the spoke members.

Though the airbag 22A and the respective armbags 42B, 44B are adapted to be inflated integrally by a single gas generator 60 by connecting the armbags 42B, 44B to the airbag 22A, and bringing them into communication with each other via the communication port 61 in the passenger protecting device in Figs. 6 and 7, it is also possible to provide an airbag 22C and armbags 42C, 44C separately and connect them respectively to the gas generator 60 of an airbag device 20B so as to be capable of introducing gas therefrom as in the passenger protecting device shown in Fig 8.

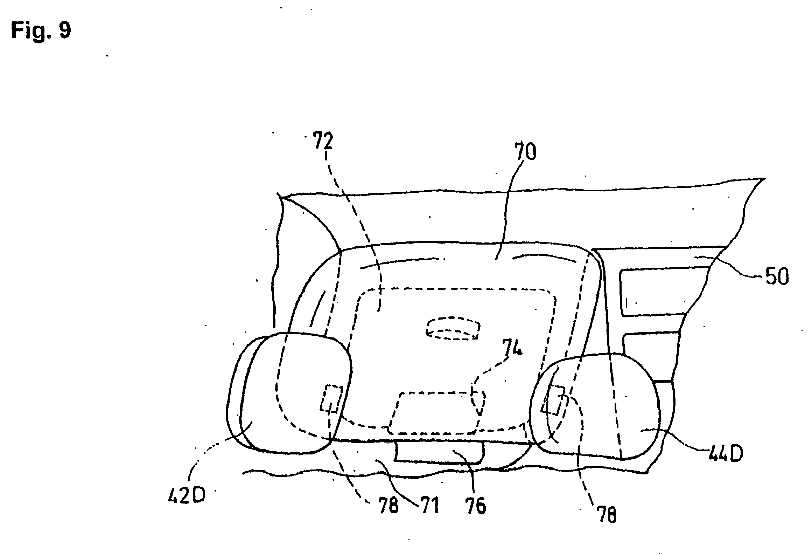

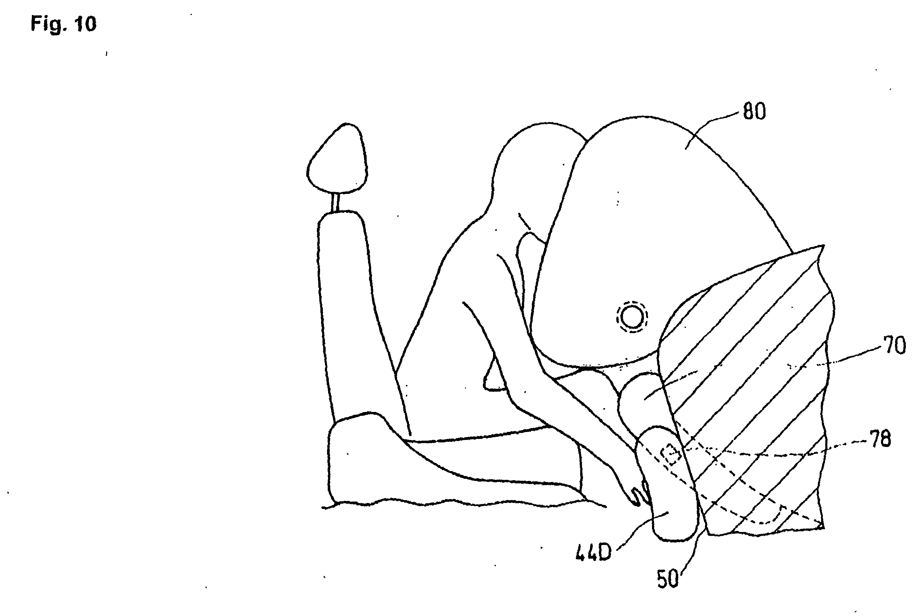

The present invention is applicable as an arm-protection device for a passenger on the front passenger seat of the motorvehicle as shown in Fig. 9 and Fig. 10. Fig. 9 is a perspective view of the kneebag and the armbags according to a seventh embodiment of the present invention in the inflated state, and Fig. 10 is a side view of the same.

A dash panel 71 located forwardly of the front passenger seat is provided with a kneebag device 74 below a globe box 72. The kneebag device 74 includes a kneebag 70, a gas generator (not shown) for inflating the kneebag 70, a container (not shown) for storing the folded kneebag 70, a lid 76 for covering the front surface of the container and so on.

A pair of armbags 42D, 44D that can be inflated at the positions forwardly of the left and right arms of the passenger on the front passenger seat are respectively connected to the left and right sides of the lower portion of the kneebag 70 in the inflated state. The respective armbags 42D, 44D and the kneebag 70 are in communication with each other via a communication port 78, and the armbags 42D, 44D and the kneebag 70 are inflated integrally by gas introduced from the gas generator into the kneebag 70, which further flows into the respective armbags 42D, 44D via the communication port 78.

The kneebag 70 and the armbags 42D, 44D receive the legs and the left and right arms of the passenger and protects the same respectively. An airbag device for the front passenger seat for receiving the upper half body of the passenger on the front passenger seat is provided upwardly of the kneebag device 74. The reference numeral 80 designates an inflated airbag for the front passenger seat.

### [Advantages]

As described thus far in detail, according to the present invention, a passenger protecting device for protecting the passenger by receiving the passenger's arm by the airbag in case of collision is provided.

## Claims

1. A passenger protecting device for a driver's seat, comprising:
an arm-protecting airbag device comprising a pair of a left arm-protecting airbag (42; 42A-42C; 52) and a right arm-protecting airbag (44; 44A-44C; 52), the left arm-protecting airbag (42; 42A-42C; 52) being provided to be inflated forwardly of a left arm of a passenger in a motor vehicle at a left side area between an instrument panel (12) and a steering wheel (16; 16A) of the motor vehicle, and the right arm-protecting airbag (44; 44A-44C; 52) being provided to be inflated forwardly of a right arm of the passenger in the motor vehicle at a right side area between the instrument panel (12) and the steering wheel (16; 16A) of the motor vehicle, and
a gas generator (40; 60) for inflating the left arm-protecting air bag (42; 42A-42C; 52) and the right arm-protecting airbag (44; 44A-44C; 52).

2. A passenger protecting device according to claim 1,
wherein said gas generator (40; 60) is shared among a kneebag device (30) for protecting the legs of the passenger or an airbag device (20; 20A) for the driver's seat.

3. A passenger protecting device according to claim 2,
wherein the left arm-protecting airbag (42; 42A-42C; 52) and the right arm-protecting airbag (44; 44A-44C; 52) of said arm-protecting airbag device are in communication with an airbag (32; 32A) of said kneebag device (30) or an airbag (22; 22A; 22C) of said airbag device (20; 20A) for the driver's seat.

4. A passenger protecting device for a front passenger seat, comprising:
a kneebag device (74) including a kneebag (70),
a gas generator for inflating the kneebag (70), and
an arm-protecting airbag device comprising a pair of a left arm-protecting airbag (42D) and a right arm-protecting airbag (42D), the left arm-protecting airbag (42D) being connected to a left side of the kneebag (70) and being inflated forwardly of a left arm of a passenger in a motor vehicle, and the right arm-protecting airbag (44D) being connected to a right side of the kneebag (70) and being inflated forwardly of a right arm of the passenger in the motor vehicle, the left and right arm-protecting airbags (42D, 44D) and the kneebag (70) being inflated integrally by gas introduced from the gas generator into the kneebag (70).

5. A passenger protecting device according to claim 4,
wherein the left arm-protecting airbag (42D) is connected to the left side of a lower portion of the kneebag (70) in an inflated state, and the right arm-protecting airbag (44D) is connected to the right side of the lower portion of the kneebag (70) in the inflated state.

6. A passenger protecting device according to claim 4 or claim 5,
wherein the left arm-protecting airbag (42D) and the right arm-protecting airbag (44D) and the kneebag (70) are in communication with each other via a communication port (78), the gas being introduced from the gas generator into the kneebag (70) further flowing into the left and right arm-protecting airbags (42D, 44D) via the communication port (78).

7. A passenger protecting device according to any one of claims 4-6,
wherein the gas generator is shared among the kneebag device (74), the arm-protecting airbag device (42D, 44D) and an airbag device (80) for a front passenger seat.

8. A passenger protesting device according to claim 7,
wherein the left and right arm-protecting airbags (42D, 44D) are in communication with the kneebag (70) of the kneebag device (74) and the airbag of the airbag device (80) for the front passenger seat.

## Patentansprüche

1. Insassenschutzeinrichtung für einen Fahrersitz, umfassend:
eine armschützende Airbageinrichtung, umfassend ein Paar aus einem linken armschützenden Airbag (42; 42A-42C; 52) und einem rechten armschützenden Airbag ( 44; 44A-44C; 52),
wobei der linke armschützende Airbag (42; 42A-42C, 52) vorgesehen ist, um vor einem linken Arm eines Insassen in einem motorisierten Fahrzeug in einem linksseitigen Bereich zwischen einem Armaturenbrett (12) und einem Lenkrad (16; 16A) des motorisierten Fahrzeugs aufgeblasen zu werden, und
wobei der rechte armschützende Airbag (44; 44A-44C; 52) vorgesehen ist, um vor einem rechten Arm des Insassen in dem motorisierten Fahrzeug in einem rechtsseitigen Bereich zwischen dem Armaturenbrett (12) und dem Lenkrad (16; 16A) des motorisierten Fahrzeugs aufgeblasen zu werden, und
einen Gasgenerator (40; 60) zum Aufblasen des linken armschützenden Airbags (42; 42A-42C; 52) und des rechten armschützenden Airbags (44; 44A-44C; 52).

2. Insassenschutzeinrichtung nach Anspruch 1,
wobei der Gasgenerator (40; 60) gemeinsam von einer die Beine des Insassen schützenden Kniesackeinrichtung (30) oder einer Airbageinrichtung (20; 20A) für den Fahrersitz benutzt wird.

3. Insassenschutzeinrichtung nach Anspruch 2,
wobei der linke armschützende Airbag (42; 42A-42C; 52) und der rechte armschützende Airbag (44; 44A-44C; 52) der armschützenden Airbageinrichtung mit einem Airbag (32; 32A) der Kniesackeinrichtung (30) oder einem Airbag (22; 22A; 22C) der Airbageinrichtung (20; 20A) für den Fahrersitz in Verbindung stehen.

4. Insassenschutzeinrichtung für einen Beifahrersitz, umfassend:
eine Kniesackeinrichtung (74) mit einem Kniesack (70),
einen Gasgenerator zum Aufblasen des Kniesacks (70), und
eine armschützende Airbageinrichtung, umfassend ein Paar aus einem linken armschützenden Airbag (42D) und einem rechten armschützenden Airbag (42D),
wobei der linke armschützende Airbag (42D) mit einer linken Seite des Kniesacks (70) verbunden ist und vor einem linken Arm eines Insassen in einem motorisierten Fahrzeug aufgeblasen wird, und
wobei der rechte armschützende Airbag (44D) mit einer rechten Seite des Kniesacks (70) verbunden ist und vor einem rechten Arm des Insassen in einem motorisierten Fahrzeug aufgeblasen wird,
wobei der linke und rechte armschützende Airbag (42D; 44D) und der Kniesack (70) gemeinsam mit Gas aufgeblasen werden, welches von dem Gasgenerator in den Kniesack (70) eingeführt wird.

5. Insassenschutzeinrichtung nach Anspruch 4,
wobei im aufgeblasenen Zustand der linke armschützende Airbag (42D) mit der linken Seite eines unteren Abschnitts des Kniesacks (70) verbunden ist, und
wobei im aufgeblasenen Zustand der rechte armschützende Airbag (44D) mit der rechten Seite des unteren Abschnitts des Kniesacks (70) verbunden ist.

6. Insassenschutzeinrichtung nach Anspruch 4 oder Anspruch 5,
wobei der linke armschützende Airbag (42D) und der rechte armschützende Airbag (44D) und der Kniesack (70) durch eine Verbindungsöffnung (78) miteinander in Verbindung stehen, und
wobei das aus dem Gasgenerator in den Kniesack (70) eingeführte Gas durch die Verbindungsöffnung (78) weiter in den linken und rechten armschützenden Airbag (42D, 44D) strömt.

7. Insassenschutzeinrichtung nach einem der Ansprüche 4-6,
wobei der Gasgenerator gemeinsam von dem Kniesack (74), von der armschützenden Airbageinrichtung (42D, 44D) und von einer Airbageinrichtung (80) für einen Beifahrersitz benutzt wird.

8. Insassenschutzeinrichtung nach Anspruch 7,
wobei der linke und rechte armschützende Airbag (42D, 44D) mit dem Kniesack (70) der Kniesackeinrichtung (74) und dem Airbag der Airbageinrichtung (80) des Beifahrersitzes in Verbindung stehen.

## Revendications

1. Dispositif de protection du passager destiné à un siège de conducteur, comprenant :
- un organe de coussin d'air (airbag) de protection de bras comprenant une paire composée d'un coussin d'air de protection du bras gauche (42 ; 42A-42C ; 52) et d'un coussin d'air de protection du bras droit (44 ; 44A-44C ; 52), le coussin d'air de protection du bras gauche (42 ; 42A-42C ; 52) étant prévu pour être gonflé vers l'avant d'un bras gauche d'un passager dans un véhicule à moteur au niveau d'une zone latérale gauche entre un tableau de bord (12) et un volant de direction (16 ; 16A) du véhicule à moteur, et le coussin d'air de protection du bras droit (44 ; 44A-C ; 52) étant prévu pour être gonflé vers l'avant d'un bras droit du passager dans le véhicule à moteur au niveau d'une zone latérale droite entre le tableau de bord (12) et le volant de direction (16 ; 16A) du véhicule à moteur, et
- un générateur de gaz (40 ; 60) pour gonfler le coussin d'air de protection du bras gauche (42 ; 42A-42C ; 52) et le coussin d'air de protection du bras droit (44 ; 44A-44C ; 52).

2. Dispositif de protection du passager selon la revendication 1, dans lequel ledit générateur de gaz (40 ; 60) est partagé avec un organe de coussin pour genou (30) pour protéger les jambes du passager ou un organe de coussin d'air (20 ; 20A) pour le siège du conducteur.

3. Dispositif de protection du passager selon la revendication 2, dans lequel le coussin d'air de protection du bras gauche (42 ; 42A-42C ; 52) et le coussin d'air de protection du bras droit (44 ; 44A-44C ; 52) dudit organe de coussin d'air de protection de bras sont en communication avec un coussin d'air (32 ; 32A) dudit organe de coussin de genou (30) ou un coussin d'air (22 ; 22A ; 22C) dudit organe de coussin d'air (20 ; 20A) pour le siège du conducteur.

4. Dispositif de protection du passager destiné à un siège de passager avant, comprenant :
- un organe de coussin de genou (74) comprenant un coussin de genou (70),
- un générateur de gaz pour gonfler le coussin de genou (70), et
- un organe de coussin d'air de protection de bras comprenant une paire composée d'un coussin d'air de protection du bras gauche (42D) et d'un coussin d'air de protection du bras droit (42D), le coussin d'air de protection du bras gauche (42D) étant raccordé à un côté gauche du coussin de genou (70) et étant gonflé vers l'avant d'un bras gauche d'un passager dans un véhicule à moteur, et le coussin d'air de protection du bras droit (44D) étant raccordé à un côté droit du coussin de genou (70) et étant gonflé vers l'avant d'un bras droit du passager dans le véhicule à moteur, les coussins d'air de protection des bras gauche et droit (42D, 44D) et le coussin de genou (70) étant complètement gonflés par du gaz introduit par le générateur de gaz dans le coussin de genou (70).

5. Dispositif de protection du passager selon la revendication 4, dans lequel le coussin d'air de protection du bras gauche (42D) est raccordé au côté gauche d'une partie inférieure du coussin de genou (70) à l'état gonflé, et le coussin d'air de protection du bras droit (44D) est raccordé au côté droit de la partie inférieure du coussin de genou (70) à l'état gonflé.

6. Dispositif de protection du passager selon la revendication 4 ou la revendication 5, dans lequel le coussin d'air de protection du bras gauche (42D) et le coussin d'air de protection du bras droit (44D) et le coussin de genou (70) sont en communication entre eux via un orifice de communication (78), le gaz étant introduit depuis le générateur de gaz dans le coussin de genou (70) et s'écoulant en outre dans les coussins d'air de protection des bras gauche et droit (42D, 44D) via l'orifice de communication (78).

7. Dispositif de protection du passager selon l'une quelconque des revendications 4 à 6, dans lequel le générateur de gaz est partagé entre l'organe de coussin de genou (74), l'organe de coussin d'air de protection de bras (42D, 44D) et un organe de coussin d'air (80) pour un siège avant de passager.

8. Dispositif de protection du passager selon la revendication 7, dans lequel les coussins d'air de protection des bras gauche et droit (42D, 44D) sont en communication avec le coussin de genou (70) de l'organe de coussin de genou (74) et le coussin d'air de l'organe de coussin d'air (80) pour le siège avant de passager.
